# EUROPEAN PATENT APPLICATION

(11) **EP 4 704 018 A1**
(43) Date of publication of application: **04.03.2026**
(21) Application number: 24201492.6
(22) Date of filing: 19.09.2024
(51) Int. Cl.: G06Q 30/0283, G06Q 20/28, G06Q 20/32, G06Q 30/0601, G07F 13/02

(54) **SYSTEMS AND METHODS FOR AUTONOMOUSLY DERIVING COMMODITY CONSUMPTION**

(30) Priority: 28.08.2024 US 202418818450
(71) Applicant: Kerpower UK Ltd, London WC2H 9JQ (GB)
(72) Inventor: Shedley, Jamie Mark, Chelmsford, CM1 1LR (GB); McNicol, James Colin, Chislehurst, BR7 5EZ (GB); Keith, Benjamin Adam, London, N1 1WL (GB); Ferraccu, Sebastian, London, SW1W 9NF (GB); Marriott, Richard, Melton Mowbray, LE14 2RR (GB); Hotchkiss, Peter, Addlestone, KT15 1RH (GB)
(74) Representative: Swindell & Pearson Limited

(57) **Abstract**

Systems, apparatuses, methods, and computer program products are disclosed for autonomously deriving consumption of fuel. An example method includes receiving a transaction request and determining a fuel pump location associated with a fuel pump identifier. The example method further includes determining a current price of a fuel type at the fuel pump terminal based on the fuel pump location and deriving a total fuel redemption volume based on the current price of the fuel type. The example method further includes updating a fuel availability data structure associated with a user account.

## Description

### BACKGROUND

Commodity purchasing typically occurs through two primary channels of wholesale or retail. Oftentimes, consumers who wish to purchase commodities must purchase the commodity through the retail market. Retail customers typically have less influence over pricing and oftentimes pay a premium compared to wholesale buyers.

### BRIEF SUMMARY

Both wholesaler and retailer commodity markets may be largely influenced by supply and demand dynamics, geopolitical events, currency fluctuations, and the like. This can lead to volatile pricing for certain commodity types. This volatility most harshly impacts consumers in the retail markets. Currently, consumers have no alternative other than to pay inflated prices for these commodities. By way of particular example, fuel prices are known for their volatility, and sudden spikes in fuel prices can cause significant harm to consumers who must, in response, either spend discretionary income on fuel, purchase less fuel, or spend less money on other obligations.

Although certain providers may offer special incentives, promotions, or discounts that mitigate the impact of commodity price fluctuations, these solutions are often temporary and inadequate to fully address the strain imposed on consumers. By way of continuing example, a particular fuel supplier may offer a fuel card that can be used at associated service stations. Although generally enabling access to a discounted fuel price, fuel cards are supplier-specific, and therefore impose logistical burdens because they may not be used at non-associated service stations. Additionally, fuel cards oftentimes have limited security measures in place to protect cardholders from fraud. Furthermore, although fuel cards may provide some discounts and/or rewards, the consumer has limited control over what discounts and/or rewards are offered.

Example embodiments described herein provide consumers with a more robust and flexible system for commodity purchasing. In particular, example embodiments described herein allows for a user to purchase a commodity for later delivery during a predefined delivery window. As described in greater detail below, a commodity management system may maintain a user account associated with or including a commodity availability data structure. The commodity availability data structure may record commodity purchases by the user as an available commodity volume for a commodity type over various delivery windows. When redeeming the commodity, the commodity management system may update the commodity availability data structure for the user to reflect the redemption and may separately provide the commodity service provider with funds in satisfaction of the transaction. In doing so, a user may be able to purchase the commodity in advance of its redemption, thereby avoiding exposure to fluctuations in price set at the discretion of suppliers in the retail market. At the same time, the seller of the commodity may receive payment in the ordinary course in a seamless manner such that the user's redemption of the commodity operates, from the perspective of the retailer, as a typical sale.

Example embodiments described herein are not affiliated or reliant on one particular supplier and, thus, do not restrict consumers to using any particular retailer for their commodity redemptions. To enable this functionality, the inventors had to overcome a technical hurdle: it is traditionally not possible for a remote third party to authoritatively determine how much of a commodity a buyer purchases from a seller. One might envision a buyer manually reporting the purchased volume, but a self-reported figure could be erroneous (through fraud, or merely a good faith mistake). Accordingly, manual reporting of commodity purchase quantity is not a plausible solution. Moreover, because the example embodiments set forth herein operate outside the view of a given seller, these embodiments cannot rely on a backend system integration with the seller (and, in any event, it would not be possible to deploy explicit system integrations with every possible seller from which the buyer might purchase the commodity). Finally, implementation of these example embodiments must necessarily occur in real-time to enable the retailer/seller of the commodity to experience the transaction as an ordinary sale (i.e., the retailer/seller must receive funds in essentially real-time). Accordingly, any sort of manual implementation would not be suitable. Avoiding all of the above drawbacks and problems, example embodiments implement a particular series of technical operations set forth herein to autonomously and in real-time to enable a user (e.g., an individual at a pump) to redeem a commodity from any seller (e.g., a retail establishment that may not have dedicated staff onsite) without any degradation of experience on the part of either the user or the retailer.

In particular, a user may initiate a transaction with a commodity terminal using a payment mechanism associated with the commodity management system. Based on the payment mechanism provided, a commodity service device associated with the commodity terminal may provide a transaction request to the commodity management system. The commodity management system may determine a commodity terminal location based on details extracted from the transaction request, and then may determine a current price of a commodity type at that particular commodity terminal using an integrated repository of commodity prices (i.e., an internal commodity price list). The commodity management system may then derive a total commodity redemption volume based on the determined current price of the commodity type at the particular commodity terminal and a transaction amount extracted from the transaction request. The commodity availability data structure may be updated based on the commodity redemption volume (i.e., a counter may be decremented) to reflect a new available commodity volume for the current delivery window.

Additionally, example embodiments described herein advantageously allow for enhanced fraud detection for a commodity redemption, thereby providing more secure protection of a user's commodity holdings. As described above, the commodity management system may determine a commodity terminal location. In some embodiments, a user device associated with the user account may also provide its location to the commodity management system. The commodity management system may then determine whether the user device location is sufficiently proximate to the commodity terminal location (e.g., by determining whether the user device is within a predefined distance or within the same predefined zip code, town, city, county, or other specifically demarcated region as the commodity terminal location). If the user device location is not sufficiently proximate to the commodity terminal location, the commodity management system may either automatically decline the transaction request or may transmit a confirmation request to the user device requiring approval of the commodity redemption. The confirmation request may seek verification of the authenticity of the transaction request from the user of user device. If a confirmation request is transmitted to the user device, the commodity management system may receive a confirmation response indicating whether the user has verified the authenticity of the transaction request. If the user fails to verify the authenticity of the transaction request, the transaction request is declined. Alternatively, if the user affirmatively verifies the authenticity of the transaction request, the commodity management system may determine that transaction request is authentic and non-fraudulent. Thus, even if the user device and/or the user is not present at the location of the transaction, the transaction may proceed, thereby allowing for greater flexibility of commodity redemption and increasing the overall availability of the system while still maintaining user account security.

As noted briefly above, example embodiments described herein ensure the accurate determination of a commodity redemption volume. In particular, in some embodiments, the commodity management system may use an internal commodity price list to determine the current price of the commodity type at the particular commodity terminal location. In some embodiments, the commodity management system may identify an elapsed time since the updating of the listing in the internal commodity price list prior to determining the current price from the internal commodity price list. The commodity price management system may then determine whether the elapsed time satisfies an elapsed time threshold to ensure the current price of the listing is not outdated or stale. If the elapsed time fails to satisfy the elapsed time threshold, the commodity management system may query one or more external authoritative commodity price services for the current price of the commodity type at the commodity terminal location and may update the internal commodity price list based on the results of the query. Alternatively, if the elapsed time satisfies the elapsed time threshold, the commodity management system may retrieve the current price of the commodity type from the internal commodity type price list. Thus, the commodity management system may ensure the listings in the internal commodity price list are sufficiently up to date without needing to expend bandwidth to query an authoritative commodity price service for every transaction request. In doing so, the functioning of the computer system implementing the commodity management system is enhanced, and optimizes use of network resources, while also enhancing transaction speed by avoiding needless external queries.

The foregoing brief summary is provided merely for purposes of summarizing some example embodiments described herein. Because the above-described embodiments are merely examples, they should not be construed to narrow the scope of this disclosure in any way. It will be appreciated that the scope of the present disclosure encompasses many potential embodiments in addition to those summarized above, some of which will be described in further detail below.

### BRIEF DESCRIPTION OF THE FIGURES

Having described certain example embodiments in general terms above, reference will now be made to the accompanying drawings, which are not necessarily drawn to scale. Some embodiments may include fewer or more components than those shown in the figures.
FIG. 1 illustrates a system in which some example embodiments may be used to autonomously derive commodity consumption.
FIG. 2 illustrates a schematic block diagram of example circuitry embodying a system device that may perform various operations in accordance with some example embodiments described herein.
FIG. 3 illustrates a schematic block diagram of example circuitry embodying a user device that may perform various operations in accordance with some example embodiments described herein.
FIG. 4 illustrates an example flowchart for deriving a total commodity redemption volume and handling a corresponding transaction request, in accordance with some example embodiments described herein.
FIG. 5 illustrates an example flowchart for determining whether a user device location is sufficiently proximate to a commodity terminal location, in accordance with some example embodiments described herein.
FIG. 6 illustrates another example flowchart for determining a current price of a commodity type, in accordance with some example embodiments described herein.
FIG. 7 illustrates another example flowchart for generating or updating a commodity availability data structure for a user, in accordance with some example embodiments described herein.
FIG. 8 illustrates another example flowchart for handling an overdraft commodity volume for a transaction request, in accordance with some example embodiments described herein.
FIG. 9 illustrates an example operational flow for updating a fuel availability data structure to reflect a fuel commodity purchase for a future delivery window.
FIG. 10 illustrates an example operational flow for updating a fuel availability data structure to reflect a transaction request.
FIG. 11 illustrates a swim lane diagram with example operations for a user commodity purchase for a future delivery window that may be performed by components of the environment depicted in FIG. 1, in accordance with some example embodiments described herein.
FIGS. 12A, 12B, and 12C illustrate a swim lane diagram with example operations for handling a transaction request from a commodity service device that may be performed by components of the environment depicted in FIG. 1, in accordance with some example embodiments described herein.

### DETAILED DESCRIPTION

Some example embodiments will now be described more fully hereinafter with reference to the accompanying figures, in which some, but not necessarily all, embodiments are shown. Because inventions described herein may be embodied in many different forms, the invention should not be limited solely to the embodiments set forth herein; rather, these embodiments are provided so that this disclosure will satisfy applicable legal requirements.

The term "computing device" refers to any one or all of programmable logic controllers (PLCs), programmable automation controllers (PACs), industrial computers, desktop computers, personal data assistants (PDAs), laptop computers, tablet computers, smart books, palm-top computers, personal computers, smartphones, wearable devices (such as headsets, smartwatches, or the like), and similar electronic devices equipped with at least a processor and any other physical components necessarily to perform the various operations described herein. Devices such as smartphones, laptop computers, tablet computers, and wearable devices are generally collectively referred to as mobile devices.

The term "server" or "server device" refers to any computing device capable of functioning as a server, such as a master exchange server, web server, mail server, document server, or any other type of server. A server may be a dedicated computing device or a server module (e.g., an application) hosted by a computing device that causes the computing device to operate as a server.

### System Architecture

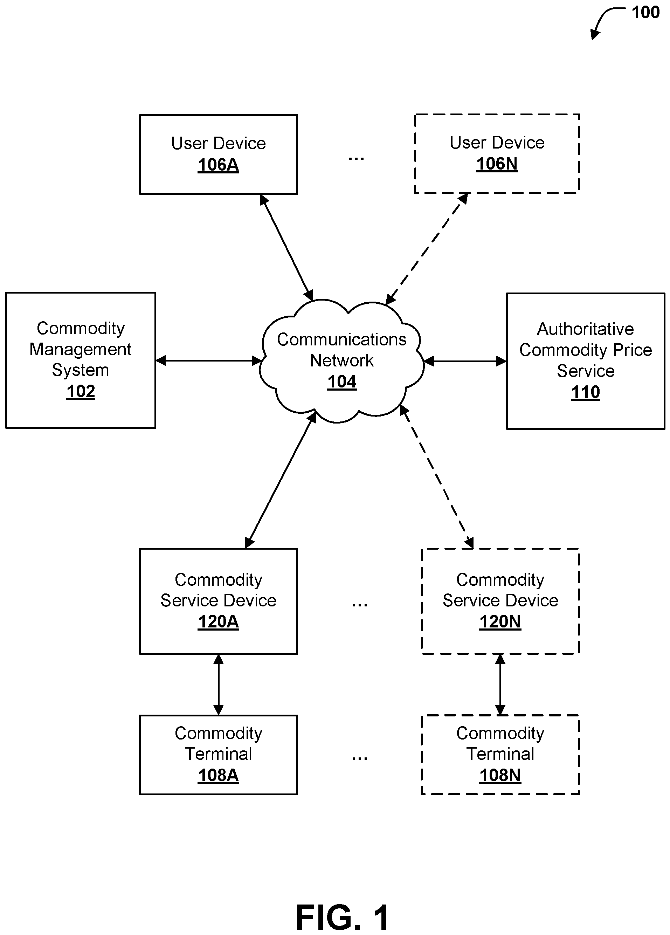

Example embodiments described herein may be implemented using any of a variety of computing devices or servers. To this end, FIG. 1 illustrates an example environment 100 within which various embodiments may operate. As illustrated, a commodity management system 102 may receive and/or transmit information via communications network 104 (e.g., the Internet) with any number of other devices, such as one or more of user devices 106A-106N, one or more commodity terminals 108A-108N, one or more commodity service devices 120A-120N, and authoritative commodity price service 110.

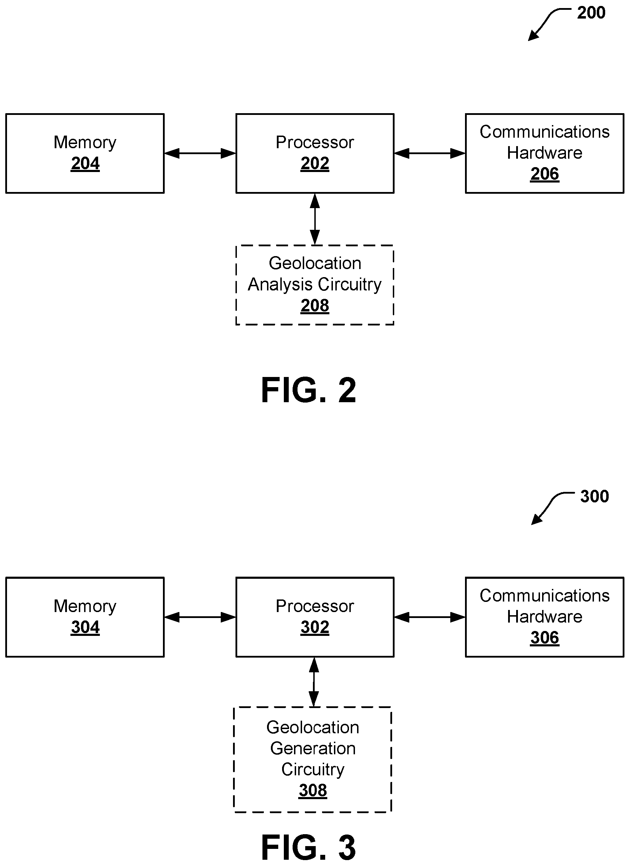

The commodity management system 102 may be implemented as one or more computing devices or servers, which may be composed of a series of components. Particular components of the commodity management system 102 are described in greater detail below with reference to apparatus 200 in connection with FIG. 2.

In some embodiments, the commodity management system 102 further includes a storage device that comprises a distinct component from other components of the commodity management system 102. The storage device may be embodied as one or more direct-attached storage (DAS) devices (such as hard drives, solid-state drives, optical disc drives, or the like) or may alternatively comprise one or more Network Attached Storage (NAS) devices independently connected to a communications network (e.g., communications network 104). The storage device may host the software executed to operate the commodity management system 102. The storage device may store information relied upon during operation of the commodity management system 102, such as various user accounts and/or commodity availability data structures that may be used by the commodity management system 102, data and documents to be analyzed using the commodity management system 102, or the like. In addition, the storage device may store control signals, device characteristics, and access credentials enabling interaction between the commodity management system 102 and one or more of the one or more of user devices 106A-106N, one or more commodity terminals 108A-108N, one or more commodity service devices 120A-120N, and/or authoritative commodity price service 110.

The one or more user devices 106A-106N may be embodied by any computing devices known in the art. The one or more user devices 106A-106N need not themselves be independent devices but may be peripheral devices communicatively coupled to other computing devices. In some embodiments, a user device (e.g., any one of user devices 106A-106N) may be associated with a user who has a user account maintained by the commodity management system 102 (e.g., a customer). Particular components of an example user device (e.g., any one of user devices 106A-106N) are described in greater detail below with reference to apparatus 300 in connection with FIG. 3.

The one or more commodity terminals 108A-108N may be embodied by any computing devices known in the art. By way of particular example, in some embodiments, a commodity terminal (e.g., any one of commodity terminals 108A-108N) may be a cash register, a fuel or gas dispenser, or other customer interaction devices. The one or more commodity terminals 108A-108N need not themselves be independent devices but may be peripheral devices communicatively coupled to other computing devices. In some embodiments, a commodity terminal (e.g., any one of commodity terminals 108A-108N) may be associated with a particular merchant, vendor, service provider, or the like. In some embodiments, a commodity terminal (e.g., any one of commodity terminals 108A-108N) may be configured with a commodity terminal identifier.

The one or more commodity service devices 120A-120N may be embodied by any computing devices known in the art. The one or more commodity service devices 120A-120N need not themselves be independent devices but may be peripheral devices communicatively coupled to other computing devices. In some embodiments, a commodity service device (e.g., any one of commodity service devices 120A-120N) may be configured to manage a financial account for a particular merchant, vendor, service provider, etc.

The authoritative commodity price service 110 may be embodied by any computing devices known in the art. The authoritative commodity price service 110 may be associated with a third-party entity collects, organizes, regulates, tracks, controls, logs, or otherwise records prices of commodity types at various commodity terminal locations. In some embodiments, the authoritative commodity price service 110 may be a data management system that is configured to operate and/or manage one or more databases. The one or more databases may store the current price data for various commodity types at different commodity terminal locations.

### Example Implementing Apparatuses

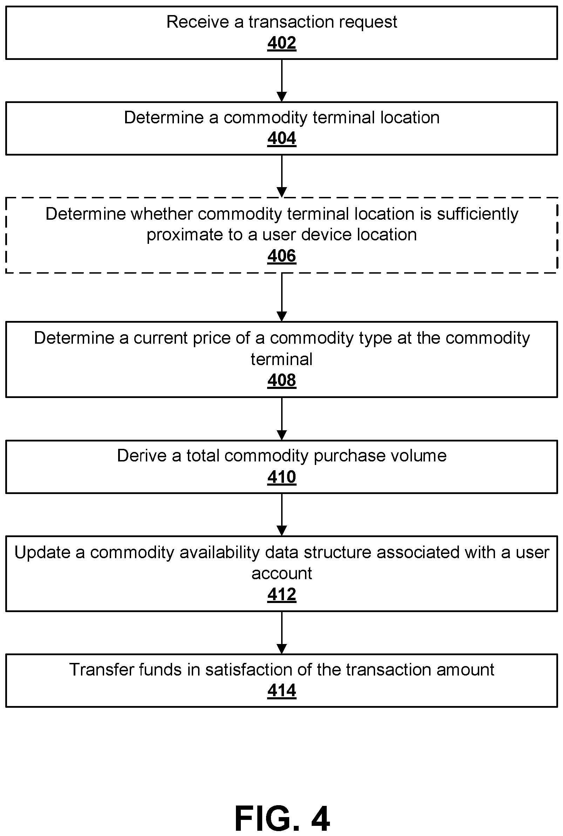

The commodity management system 102 (described previously with reference to FIG. 1) may be embodied by one or more computing devices or servers, shown as apparatus 200 in FIG. 2. The apparatus 200 may be configured to execute various operations described above in connection with FIG. 1 and below in connection with FIGS. 4-8. As illustrated in FIG. 2, the apparatus 200 may include processor 202, memory 204, communications hardware 206, and geolocation analysis circuitry 208, each of which will be described in greater detail below.

The processor 202 (and/or co-processor or any other processor assisting or otherwise associated with the processor) may be in communication with the memory 204 via a bus for passing information amongst components of the apparatus. The processor 202 may be embodied in a number of different ways and may, for example, include one or more processing devices configured to perform independently. Furthermore, the processor may include one or more processors configured in tandem via a bus to enable independent execution of software instructions, pipelining, and/or multithreading. The use of the term "processor" may be understood to include a single core processor, a multi-core processor, multiple processors of the apparatus 200, remote or "cloud" processors, or any combination thereof.

The processor 202 may be configured to execute software instructions stored in the memory 204 or otherwise accessible to the processor. In some cases, the processor may be configured to execute hard-coded functionality. As such, whether configured by hardware or software methods, or by a combination of hardware with software, the processor 202 represent an entity (e.g., physically embodied in circuitry) capable of performing operations according to various embodiments of the present invention while configured accordingly. Alternatively, as another example, when the processor 202 is embodied as an executor of software instructions, the software instructions may specifically configure the processor 202 to perform the algorithms and/or operations described herein when the software instructions are executed.

Memory 204 is non-transitory and may include, for example, one or more volatile and/or non-volatile memories. In other words, for example, the memory 204 may be an electronic storage device (e.g., a computer readable storage medium). The memory 204 may be configured to store information, data, content, applications, software instructions, or the like, for enabling the apparatus to carry out various functions in accordance with example embodiments contemplated herein.

The communications hardware 206 may be any means such as a device or circuitry embodied in either hardware or a combination of hardware and software that is configured to receive and/or transmit data from/to a network and/or any other device, circuitry, or module in communication with the apparatus 200. In this regard, the communications hardware 206 may include, for example, a network interface for enabling communications with a wired or wireless communication network. For example, the communications hardware 206 may include one or more network interface cards, antennas, buses, switches, routers, modems, and supporting hardware and/or software, or any other device suitable for enabling communications via a network. Furthermore, the communications hardware 206 may include the processing circuitry for causing transmission of such signals to a network or for handling receipt of signals received from a network.

The communications hardware 206 may further be configured to provide output to a user and, in some embodiments, to receive an indication of user input. In this regard, the communications hardware 206 may comprise a user interface, such as a display, and may further comprise the components that govern use of the user interface, such as a web browser, mobile application, dedicated client device, or the like. In some embodiments, the communications hardware 206 may include a keyboard, a mouse, a touch screen, touch areas, soft keys, a microphone, a speaker, and/or other input/output mechanisms. The communications hardware 206 may utilize the processor 202 to control one or more functions of one or more of these user interface elements through software instructions (e.g., application software and/or system software, such as firmware) stored on a memory (e.g., memory 204) accessible to the processor 202.

Optionally, the apparatus 200 further comprises a geolocation analysis circuitry 208 that may be configured to determine a commodity terminal location and/or determine whether the user device location is sufficiently proximate to the commodity terminal location. The geolocation analysis circuitry 208 may utilize processor 202, memory 204, or any other hardware component included in the apparatus 200 to perform these operations, as described in connection with FIGS. 4-8 below. The geolocation analysis circuitry 208 may further utilize communications hardware 206 to gather data from a variety of sources (e.g., any one of user devices 106A-106N, commodity service devices 120A-120B, commodity terminals 108A-108N, and/or authoritative commodity price service 110, as shown in FIG. 1), and/or exchange data with a user (e.g., via any one of user device 106A-106N) and/or another entity (e.g., commodity service devices 120A-120B and/or commodity terminals 108A-108N).

Although components 202-208 are described in part using functional language, it will be understood that the particular implementations necessarily include the use of particular hardware. It should also be understood that certain of these components 202-208 may include similar or common hardware. For example, the geolocation analysis circuitry 208 may at times leverage use of the processor 202, memory 204, or communications hardware 206, such that duplicate hardware is not required to facilitate operation of these physical elements of the apparatus 200 (although dedicated hardware elements may be used for any of these components in some embodiments, such as those in which enhanced parallelism may be desired). Use of the terms "circuitry" and "engine" with respect to elements of the apparatus therefore shall be interpreted as necessarily including the particular hardware configured to perform the functions associated with the particular element being described. Of course, while the terms "circuitry" and "engine" should be understood broadly to include hardware, in some embodiments, the terms "circuitry" and "engine" may in addition refer to software instructions that configure the hardware components of the apparatus 200 to perform the various functions described herein.

Although the geolocation analysis circuitry 208 may leverage processor 202, memory 204, or communications hardware 206 as described above, it will be understood that any of geolocation analysis circuitry 208 may include one or more dedicated processor, specially configured field programmable gate array (FPGA), or application specific interface circuit (ASIC) to perform its corresponding functions, and may accordingly leverage processor 202 executing software stored in a memory (e.g., memory 204), or communications hardware 206 for enabling any functions not performed by special-purpose hardware. In all embodiments, however, it will be understood that geolocation analysis circuitry 208 comprise particular machinery designed for performing the functions described herein in connection with such elements of apparatus 200.

As illustrated in FIG. 3, an apparatus 300 is shown that represents an example user device (e.g., any of user devices 106A-106N). The apparatus 300 includes processor 302, memory 304, and communications hardware 306, and may optionally include geolocation generation circuitry 308. The geolocation generation circuitry 308 may be configured to determine a user device location of apparatus 300. In some embodiments, the geolocation generation circuitry 308 may determine the user device location based on global positioning system (GPS) satellites such that it may determine GPS coordinates as the user device location. In some embodiments, the geolocation generation circuitry 308 may additionally, or alternatively, determine the user device location based on signals from nearby cell towers, nearby wi-fi networks, received signals from Bluetooth beacons, and/or the like. The geolocation generation circuitry 308 may utilize processor 302, memory 304, or any other hardware component included in the apparatus 300 to perform these operations, as described in connection with FIG. 4-8 below. The geolocation generation circuitry 308 may further utilize communications hardware 306 to provide the user device location to the commodity management system 102.

In some embodiments, various components of the apparatuses 200 and 300 may be hosted remotely (e.g., by one or more cloud servers) and thus need not physically reside on the corresponding apparatus 200 or 300. For instance, some components of the apparatus 200 may not be physically proximate to the other components of apparatus 200. Similarly, some or all of the functionality described herein may be provided by third party circuitry. For example, a given apparatus 200 may access one or more third party circuitries in place of local circuitries for performing certain functions.

As will be appreciated based on this disclosure, example embodiments contemplated herein may be implemented by an apparatus 200 or 300; when performed via an apparatus 200 or 300, such embodiments may be referred to as computer-implemented methods. Furthermore, some example embodiments may take the form of a computer program product comprising software instructions stored on at least one non-transitory computer-readable storage medium (e.g., memory 204). Any suitable non-transitory computer-readable storage medium may be utilized in such embodiments, some examples of which are non-transitory hard disks, CD-ROMs, DVDs, flash memory, optical storage devices, and magnetic storage devices. It should be appreciated, with respect to certain devices embodied by apparatus 200 as described in FIG. 2 or apparatus 300 as described in FIG. 3, that loading the software instructions onto a computing device or apparatus produces a special-purpose machine comprising the means for implementing various functions described herein.

### Example Operations

Turning to FIGS. 4-8, example flowcharts are illustrated that contain example operations implemented by example embodiments described herein. The operations illustrated in FIGS. 4-8 may, for example, be performed by the commodity management system 102 shown in FIG. 1, which may in turn be embodied by an apparatus 200, which is shown and described in connection with FIG. 2. To perform the operations described below, the apparatus 200 may utilize one or more of processor 202, memory 204, communications hardware 206, geolocation analysis circuitry 208, and/or any combination thereof. It will be understood that user interaction with the commodity management system 102 may occur directly via communications hardware 206 or may instead be facilitated by a separate user device (e.g., any one of user devices 106A-106N) or commodity service device (e.g., any one of commodity services devices 120A-120N), and which may have similar or equivalent physical componentry facilitating such user interaction.

Turning first to FIG. 4, example operations are shown for deriving a total commodity redemption volume and handling a corresponding transaction request. As shown by operation 402, the apparatus 200 includes means, such as processor 202, memory 204, communications hardware 206, or the like, for receiving a transaction request. A transaction request may be indicative of a currently pending transaction between a user and a commodity terminal, such as commodity terminal 108A. By way of example, the transaction request may be indicative of a transaction for fuel for a user at a fuel pump terminal (e.g., commodity terminal 108A). In some embodiments, the transaction request may be received by communications hardware 206 while the transaction is still occurring (e.g., the user is still dispensing fuel from the fuel pump terminal) and an updated transaction request may be received by the communications hardware 206 once the transaction has finished (e.g., the user has finished dispensing fuel from the fuel pump terminal). Alternatively, the transaction request may be received by the communications hardware 206 once the transaction has finished.

In some embodiments, the transaction request may be received by the communications hardware 206 from a commodity service device, such as commodity service device 120A, that is associated with the commodity terminal 108A with which the user is interacting. In some embodiments, during or at the conclusion of a transaction, the commodity terminal 108A may provide a transaction notification to the commodity service device 120A. The transaction notification may be indicative of a cost (e.g., a transaction amount) the commodity used by the customer. The commodity service device 120A may then provide a transaction request to the communications hardware 206.

In some embodiments, the user may initiate a transaction with commodity terminal 108A using a designated card that is associated with or linked to a user's account and/or an associated commodity availability data structure. For example, the card may operate similarly to a fuel card, credit card, debit card, or the like by providing data to the commodity terminal 108A via a magnetic stripe, a chip, a card number, etc. In some embodiments, the data may be indicative of a primary account number, cardholder name, service code, and/or a dynamic unique code for (e.g., for chip-enabled cards).

In some embodiments, the user may initiate the transaction with the commodity terminal 108A by directly using the card with commodity terminal 108A. For example, if the commodity terminal 108A is a fuel pump, the user may insert, swipe, tap, or otherwise use the card to directly interact with the commodity terminal 108A to initiate the transaction. Alternatively, in some embodiments, the user may interact with the commodity terminal 108A via a user device, such as user device 106A. For example, the user device 106A may store the card information, such as in a smart digital wallet. In such an instance, the user device 106A may interact with the commodity terminal 108A to provide the card information, such as via near field communication (NFC), and thereby allows for the user to initiate a contactless payment with the commodity terminal 108A.

The commodity terminal 108A may provide the card data to the commodity service device 120A, along with the transaction amount, and the commodity service device 120A may use the card data to identify a card issuer and/or apparatus 200. The card issuer may be a financial may be a financial institution with which apparatus 200 has an associated financial account. Alternatively, the card issuer may be apparatus 200. In some embodiments, the commodity service device 120A may use the primary account number to identify an issuer identification number (e.g., the first six numbers of the primary account number) of the card issuer. The commodity service device 120A may identify an appropriate route for the transaction request such that the communications hardware 206 may ultimately receive the transaction request. For example, the commodity service device 120A may provide the transaction request to the card issuer, who may then forward the transaction request to communications hardware 206. Alternatively, the commodity service device 120A may directly provide the transaction request to communications hardware 206.

A transaction request may include an account identifier associated with a user account. In some embodiments, the account identifier may be the primary account number, the cardholders name, and/or the like. Additionally, the transaction request may include a commodity terminal identifier. A commodity terminal identifier may identify the particular commodity terminal 108A, commodity service device 120A, and/or the like. In some embodiments, the commodity terminal identifier may be a terminal identifier (TID) that uniquely identifies the specific payment terminal (e.g., commodity terminal 108A) at a service provider location. As one particular example, each fuel pump, cash register, or terminal at a fuel service station may be associated with a unique TID that uniquely identifies the device and differentiates it from other fuel pumps, cash registers, terminals, or other devices at the merchant.

Additionally, or alternatively, in some embodiments, a commodity terminal identifier may be a merchant identifier (MID) that uniquely identifies the particular merchant. In some embodiments, a MID may uniquely identify a particular service provider, merchant, vendor, or the like. As one particular example, a MID may uniquely identify a store of gas station X from a different store of gas station Y. In some embodiments, a merchant may use a single MID to identify each of its stores or locations. In some embodiments, a merchant may use a particular MID to identify a portion of its stores (e.g., regional branches). In some embodiments, the commodity service device 120A may be configured to include a TID along with an MID in an instance in which the MID does not uniquely identify a particular store. In some embodiments, the commodity terminal 108A may be configured to provide the commodity terminal identifier to the commodity service device 120A. Alternatively, the commodity service device 120A may be configured to determine the commodity terminal identifier for the commodity terminal 108A.

In some embodiments, a commodity transaction request may relate specifically to a transaction involving fuel or gasoline, such as at a gas station, service station, petrol station, or the like. As such, in some embodiments, the commodity terminal identifier may be a fuel pump identifier that specifically identifies a fuel pump at the service station or identifies the particular service station.

As shown by operation 404, the apparatus 200 includes means, such as processor 202, memory 204, or the like, for determining a commodity terminal location. Once the communications hardware 206 has received the transaction request, processor 202 may be configured to determine a commodity terminal location. In some embodiments, the commodity terminal location may be an address registered to a merchant that operates commodity terminal 108A. For example, the commodity terminal location for a fuel pump terminal may be a business address for the particular service station.

In some embodiments, the transaction request may include the address of the associated merchant. Thus, the processor 202 may determine the commodity terminal location from the address included in the transaction request. Alternatively, the processor 202 may process the transaction request to identify the MID, TID, or other identifier and use a location verification database to determine the commodity terminal location. In some embodiments, a location verification database may be a trusted and secure database, operated by apparatus 200 or a third-party entity, that is configured to store and maintain up-to-date and accurate business addresses for various entities. In particular, the location verification database may include entries for MIDs, TIDs, or other identifiers and each entry may describe an address corresponding to the MID, TID, or other identifier. As such, the processor may determine the commodity terminal location associated with the commodity terminal identifier using the location verification database.

In some embodiments, the commodity terminal location may be a fuel pump location. In particular, the fuel pump location may be associated with the fuel pump identifier and may correspond to the address of the associated service station.

Optionally, as shown by operation 406, the apparatus 200 includes means, such as processor 202, memory 204, geolocation analysis circuitry 208, or the like, for determining whether a user device location is sufficiently proximate to a commodity terminal location. In some embodiments, geolocation analysis circuitry 208 may be configured to automatically perform a proximity check to ensure the user device location of a user device associated with the user account and commodity availability data structure is sufficiently proximate to the commodity terminal location. This may increase the security of the transaction by first verifying that the user device is located nearby the commodity terminal, which may be indicative that the corresponding user is present at the location of the transaction. If the user device location is not sufficiently proximate to the commodity terminal location, additional measures may be taken to ensure the transaction request received in operation 402 is legitimate.

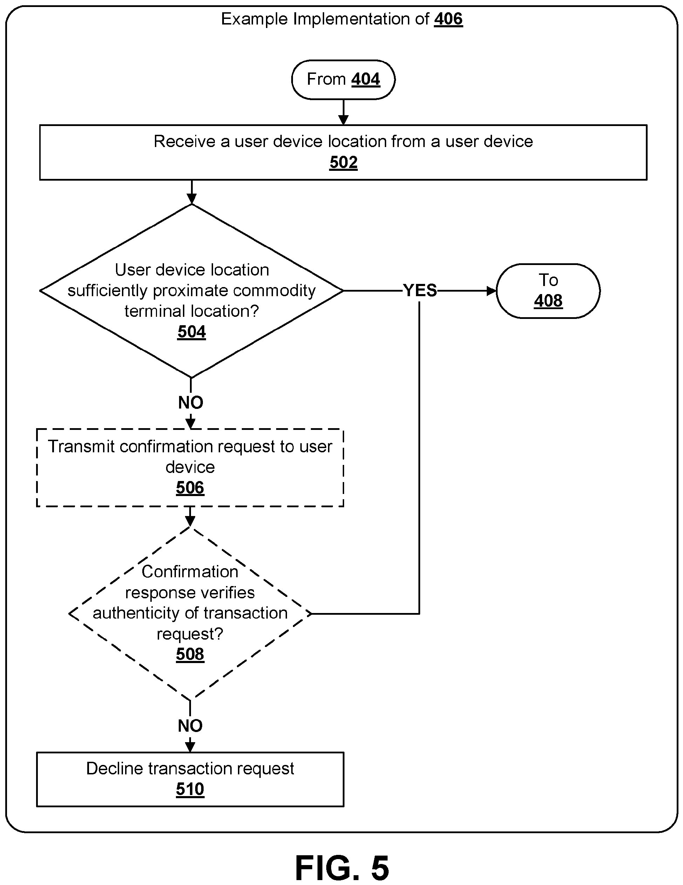

In some embodiments, operation 406 may be performed in accordance with the operations described by FIG. 5. Turning now to FIG. 5, example operations are shown for receiving a user device location and determining whether the user device location is sufficiently proximate the commodity terminal location.

As shown by operation 502, the apparatus 200 includes means, such as processor 202, memory 204, communications hardware 206, or the like, for receiving a user device location from a user device. In some embodiments, a user device 106A may share its location data with apparatus 200 such that communications hardware 206 may receive user device location data from the user device 106A. In some embodiments, the user device location data may be received continuously or in periodic or semi-periodic intervals under preconfigured conditions. For example, the communications hardware 206 may receive user device location data from the user device 106A every 30 seconds while the user is logged into a user account via a software application associated with apparatus 200. The location data may include coordinates indicative of the user device's longitude and latitude. Additionally, coordinates may be timestamped to indicate the time and/or date the location was determined.

In some embodiments, processor 202 may identify a user account based on the account identifier included in the transaction request. The processor 202 may then identify a user device, such as user device 106A that is associated with a user account. In some embodiments, the user device 106A may be associated with the user account in an instance in which the user has previously used the user device 106A to register for a user account and/or log in to or access a user account. In some embodiments, the user may have manually added the user device 106A to his/her user account as a trusted device. The user device may be further associated with a phone number, international mobile equipment identifier (IMEI), serial number, or another identifier that uniquely identifies the user device 106A. In some embodiments, the user device 106A may be associated with an activity log that may be indicative of when the user device 106A has accessed the user account and further, processor 202 may use the activity log to determine whether the user device 106A currently has an active session with apparatus 200. In an instance in which the user device 106A currently has an active session with the apparatus 200 and the user has permissioned the provision of location data, the communications hardware 206 may automatically receive the location data from the user device. In an instance in which the user device 106A does not currently have an active session, the communications hardware 206 may provide a request for the user device 106A to provide its current location data to communications hardware 206. Upon receipt of the request, the user device 106A may prompt the user to enable a one-time provision of the user device location data or may prompt the user to login to his/her user account via the associated software application to share the user device location data. In an instance in which the user affirmatively confirms a one-time provision of the user device location and/or logs into his/her user account via the software application, the communications hardware 206 may receive the user device location.

As shown by operation 504, the apparatus 200 includes means, such as processor 202, memory 204, geolocation analysis circuitry 208, or the like, for determining whether the user device location is sufficiently proximate the commodity terminal location. Once the geolocation analysis circuitry 208 has determined the user device location, the geolocation analysis circuitry 208 may compare the user device location to the commodity terminal location. The geolocation analysis circuitry 208 may be configured with a proximity threshold set by an authorized user of apparatus 200. A proximity threshold may describe a predefined distance within which the user device location should be within the commodity terminal location or a predefined zip code, town, city, county, or other specifically demarcated region as the commodity terminal location.

By way of particular example, a commodity terminal location for a fuel pump (e.g., a fuel pump location) may be a business address of the merchant and the address may be associated with a particular bounded geographic area. The bounded geographic area may be any shape or size and may define the boundaries of the merchant location. In some embodiments, the proximity threshold may be 0 such that the geolocation analysis circuitry 208 may determine whether the user device location is within the bounded geographic region of the fuel pump location. In an instance the user device 106A is within the bounded geographic region of the fuel pump location (e.g., the coordinates of the user device 106A are within the bounded geographic region), the geolocation analysis circuitry 208 may determine the user device is sufficiently proximate to the fuel pump location. Alternatively, if the geolocation analysis circuitry 208 determines the user device 106A is outside the bounded geographic region of the fuel pump location (e.g., the coordinates of the user device 106A are outside of the bounded geographic region), the geolocation analysis circuitry 208 may determine the user device is not sufficiently proximate to the fuel pump location.

As another example, the proximity threshold may be 10 feet such that the geolocation analysis circuitry 208 may determine whether the user device location is in the bounded geographic region or within 10 feet of the bounded geographic region of the fuel pump location. In an instance the user device 106A is within the bounded geographic region or within 10 feet of the bounded geographic region of the fuel pump location, the geolocation analysis circuitry 208 may determine the user device is sufficiently proximate to the fuel pump location. Alternatively, if the geolocation analysis circuitry 208 determines the user device 106A is located 10 feet or more outside the bounded geographic region of the fuel pump location, the geolocation analysis circuitry 208 may determine the user device is not sufficiently proximate to the fuel pump location.

In an instance in which the user device is sufficiently proximate to the commodity terminal location, the process proceeds to operation 408. If the geolocation analysis circuitry 208 determines the user device is sufficiently proximate to the commodity terminal location, the geolocation analysis circuitry 208 may determine that the corresponding user is present at the location of the transaction with reasonable certainty. Thus, additional fraud prevention measures do not need to be performed by the geolocation analysis circuitry 208, thereby conserving network bandwidth while still maintaining security of the user account.

In an instance in which the user device fails to be sufficiently proximate to the commodity terminal location, the process proceeds to operation 506. As shown by operation 506, the apparatus 200 includes means, such as processor 202, memory 204, communications hardware 206, or the like for transmitting a confirmation request to the user device. If the geolocation analysis circuitry 208 determines that the user device location is not sufficiently proximate to the commodity terminal location, the geolocation analysis circuitry 208 may perform additional fraud prevention measures. In particular, the communications hardware 206 may transmit or provide a confirmation request to the user device 106A. The confirmation request may seek verification of the authenticity of the transaction request from the user of user device 106A. In some embodiments, the confirmation request may prompt include software instructions that instruct the user device 106A to prompt the user for user input indicative of whether the transaction request is authentic. In some embodiments, the confirmation request may be indicative of the transaction amount, the commodity terminal location, and/or the like such that the user is provided with context of the transaction request.

In doing so, apparatus 200 does not automatically decline the transaction request and instead allows for the user to verify the authenticity of the transaction request. This may be useful, for example, in an instance in which the user's trusted family member or friend used the card with the user's permission. In such an instance, the user device location may not be proximate to the commodity terminal location, but the user may still wish to allow the transaction to proceed. Thus, the user may provide a confirmation response by interacting with the displayed prompts to authenticate the transaction request.

As shown by operation 508, the apparatus 200 includes means, such as processor 202, memory 204, communications hardware 206, geolocation analysis circuitry 208, or the like for determining whether a confirmation response verifies the authenticity of the transaction request. In some embodiments, the communications hardware 206 may receive a confirmation response from the user device 106A. The confirmation response may verify the authenticity of the transaction request, such as in an instance in which the user affirmatively confirms the authenticity of the transaction request. Alternatively, the confirmation response may fail to verify the authenticity of the transaction request, such as in an instance in which the user denies the authenticity of the transaction request or the user fails to provide any input. In an instance in which the user fails to provide input within a predefined time frame (e.g., within one minute), the geolocation analysis circuitry 208 may automatically determine that the confirmation response has failed to verify the authenticity of the transaction request.

In an instance in which the confirmation response verifies the authenticity of the transaction request, the process proceeds to operation 408. If the geolocation analysis circuitry 208 determines the confirmation response successfully verifies the authenticity of the transaction request, the geolocation analysis circuitry 208 may determine that transaction request is authentic and non-fraudulent. Thus, even if the user device and/or the user is not present at the location of the transaction, the transaction may proceed, thereby allowing for flexibility and increasing the overall robustness of the system while still maintaining user account security.

In an instance in which the confirmation response fails to verify the authenticity of the transaction request, the process proceeds to operation 510. As shown by operation 510, the apparatus 200 includes means, such as processor 202, memory 204, communications hardware 206, geolocation analysis circuitry 208, or the like for declining the transaction request. If the geolocation analysis circuitry 208 fails to verify the authenticity of the transaction request, processor 202 may decline the transaction request. In such an instance, the transaction request may be a potentially fraudulent transaction and thus, should not be allowed to proceed in order to protect the user's account. In some embodiments, in an instance in which the processor 202 declines the transaction request, the communications hardware 206 may provide a transaction decline notification to the commodity service device 120A and/or the user device 106A.

Returning now to FIG. 4, as shown by operation 408, the apparatus 200 includes means, such as processor 202, memory 204, communications hardware 206, or the like for determining a current price of a commodity type at the commodity terminal. Processor 202 may determine a current price of a commodity type at the commodity terminal 108A based on the commodity terminal location. In particular, in some embodiments, memory 204 may store and/or maintain an internal commodity price list that may include entries for various commodity terminal locations. Each entry may describe a current price for one or more different commodity types associated with the merchant location.

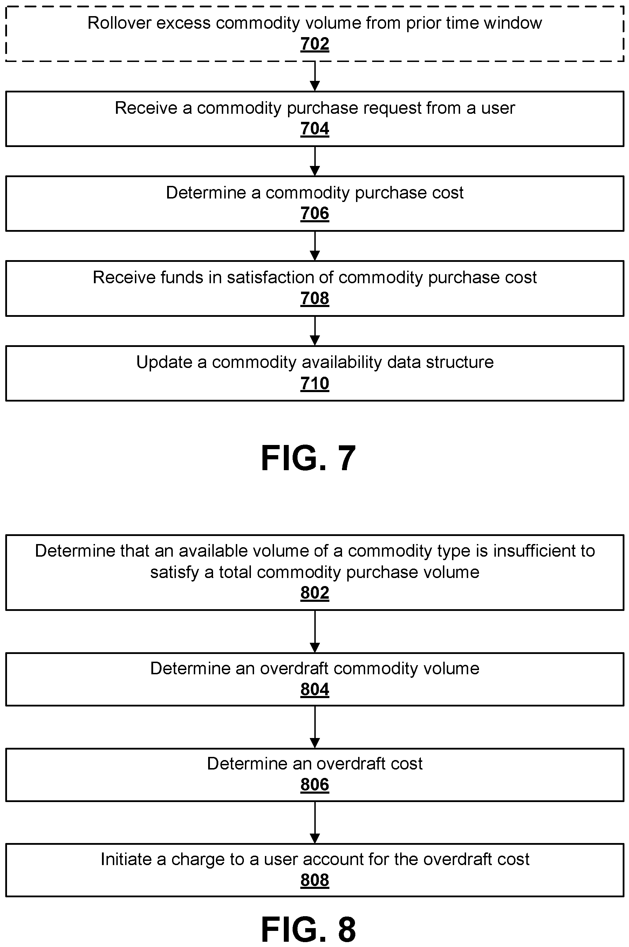

In some embodiments, the processor 202 may identify a commodity type for current delivery window corresponding to the transaction request using the user's commodity availability data structure. As will be described in greater detail in FIG. 7, a user may purchase a particular commodity type for a future delivery window and the user's commodity availability data structure may be updated to reflect the commodity purchase. In particular, the commodity availability data structure may include an available volume for the commodity type for the future delivery window. For example, a user may purchase 60 gallons of regular unleaded gasoline for a future delivery window of August 2024. As such, the commodity availability data structure may reflect an available volume of 50 gallons for the regular unleaded gasoline (e.g., the commodity type) during the month of August in 2024. The processor 202 may determine a current delivery window during which the transaction request was received and may access the commodity availability structure associated with the user's account to determine the commodity type purchased for the corresponding delivery window. By way of continuing example, the transaction request may be received on August 3, 2024, such that the processor 202 may determine a current delivery window of August 2024. The processor 202 may then analyze the commodity availability data structure to identify a commodity type of regular unleaded gasoline during this delivery window. Thus, processor 202 may determine a current price of regular unleaded gasoline at the commodity terminal location.

In some embodiments, the processor 202 may determine a current price for a fuel type at the fuel pump terminal in an instance in which the transaction request relates to a fuel transaction. The current price for fuel types at fuel pump locations may be stored and/or maintained in an internal fuel type price list (e.g., a commodity type price list). For example, an internal fuel type price list may include entries for various gas station locations and further, may describe the current price for regular unleaded gasoline, mid-grade unleaded gasoline, premium unleaded gasoline, diesel fuel, E85 (flex fuel), and/or the like. By way of particular example, a fuel type price list may include a listing for gas station X at address Y (e.g., fuel pump location). The listing may further define a current price of $3.50 per gallon for regular unleaded gasoline, $3.60 per gallon for mid-grade unleaded gasoline, $3.80 per gallon for premium unleaded gasoline, and $3.00 for diesel fuel. The internal fuel type price list may further include another listing for gas station X at address Z (e.g., commodity terminal location). This listing may define a current price of $3.00 per gallon for regular unleaded gasoline, $3.10 per gallon for mid-grade unleaded gasoline, $3.20 per gallon for premium unleaded gasoline, and $2.50 per gallon for diesel fuel.

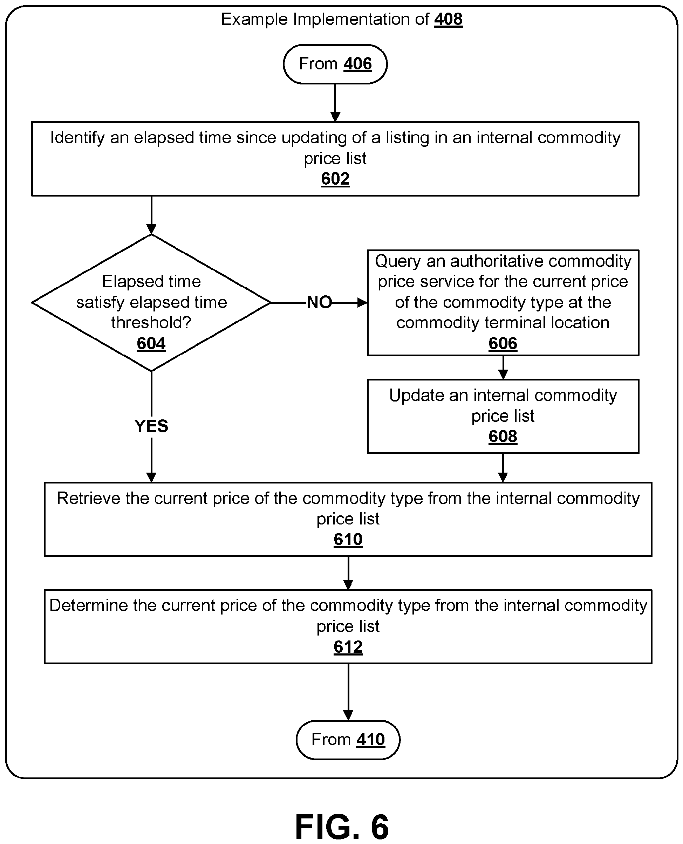

In some embodiments, operation 408 may be performed in accordance with the operations described by FIG. 6. Turning now to FIG. 6, example operations are shown for determining the current price of a commodity type.

As shown by operation 602, the apparatus 200 includes means, such as processor 202, memory 204, or the like for identifying an elapsed time since updating of a listing in an internal commodity price list. In some embodiments, each current price for a commodity type in the internal commodity price list may be associated with an update timestamp. An update timestamp may be indicative of the time when the current price was most recently updated for the particular commodity type and/or listing. For example, a listing for gas station X with a commodity terminal location at address Z, may include a current price value of $3.50 per gallon for regular unleaded gasoline and have an associated timestamp of 11:00 am on August 3, 2024. Thus, this may be indicative that the current price of regular unleaded gasoline in the internal commodity price list was last updated for gas station X at 11:00 am on August 3, 2024.

In some embodiments, the processor 202 may be configured to determine an elapsed time since the updating of the listing for the commodity type in the internal commodity price list. In particular, the processor 202 may be configured to determine an elapsed time based on the current time and date and the update timestamp associated with a listing of interest. The processor 202 may use one or more mathematical and/or logical operations to determine the elapsed time.

As shown by operation 604, the apparatus 200 includes means, such as processor 202, memory 204, or the like for determining whether the elapsed time satisfies an elapsed time threshold. Once processor 202 identifies an elapsed time since updating of the listing in the internal commodity price list, the processor 202 may determine whether the elapsed time satisfies the elapsed time threshold. The elapsed time threshold may define limits for the elapsed time and thereby controls how often listings in the internal commodity price list are updated and/or how often an authoritative price service is queried. In doing so, the processor 202 may ensure the listings in the internal commodity price list are accurate and up to date without needing to expend extraneous bandwidth to query an authoritative commodity price service for every transaction request.

For example, an elapsed time threshold may be four hours such that the processor 202 may determine whether the elapsed time for the listing exceeds four hours. If the elapsed time exceeds the elapsed time threshold of four hours, the processor 202 may determine the elapsed time threshold is not satisfied. Alternatively, if the elapsed time is four hours or less, the processor 202 may determine the elapsed time threshold is satisfied.

In some embodiments, an elapsed time threshold may be a value that is set by an authorized user (e.g., a permissioned employee associated with apparatus 200). In some embodiments, the processor 202 may periodically or semi-periodically identify an elapsed time since updating of a listing and determine whether the elapsed time satisfies the elapsed time threshold automatically. That is, the processor 202 may automatically perform operations 602 and 604 without the communications hardware 206 first having received a transaction request. Here, the elapsed time threshold may correspond to a time when an authoritative commodity price service 110 is updated. As such, the listing in the internal commodity price list may be updated to ensure the current price for the listing is accurate and follows an update schedule of the authoritative commodity price service 110. In an instance in which the elapsed time satisfies the elapsed time threshold, the process proceeds directly to operation 610. In an instance in which the elapsed time fails to satisfy the elapsed time threshold, the process proceeds to operation 606 such that operations 606 and 608 are performed prior to operation 610. This ensures the current price determined for the commodity type is accurate.

In an instance in which the elapsed time fails to satisfy the elapsed time threshold, the process proceeds to operation 606. As shown by operation 606, the apparatus 200 includes means, such as processor 202, memory 204, communications hardware 206, or the like for querying an authoritative commodity price service for the current price of the commodity at the commodity terminal location. In an instance in which processor 202 determines the elapsed time fails to satisfy the elapsed time threshold, this may be indicative that the listing for the commodity type in the internal commodity price list may be outdated or stale. Thus, the current price for the listing in the internal commodity price list should be updated based on a current price for a corresponding listing in an authoritative commodity price service, such as authoritative commodity price service 110. In some embodiments the internal commodity price list is queried at least once per day.

The communications hardware 206 may query the authoritative commodity price service 110 for the current price of the commodity type at the commodity terminal location. The authoritative commodity price service 110 may be an entity that collects, organizes, regulates, tracks, controls, logs, or otherwise records prices of commodity types at various commodity terminal locations. In some embodiments, the authoritative commodity price service 110 may be a data management system that is configured to operate and/or manage one or more databases. The one or more databases may store the current price data for various commodity types at different commodity terminal locations.

In some embodiments, the communications hardware 206 may have associated credentials that allow it to access to the authoritative commodity price service 110 and/or the one or more databases managed by the authoritative commodity price service. In some embodiments, the query may include a request to retrieve the current price data for the commodity type of interest at the commodity location. By way of continuing example, the query may include a request for a current price value for regular unleaded gasoline for gas station X at commodity terminal location Z. In some embodiments, the query may include a request for additional current price values for other commodity types at the commodity terminal location and/or current price values for commodity types at a different commodity terminal location. In doing so, this may help minimize the number of queries needed to be performed by the communications hardware 206, and thereby reduces overall network bandwidth usage.

In some embodiments, the authoritative commodity price service 110 is an authoritative fuel price service that may be configured to store and/or maintain current prices for fuel types at various fuel pump location.

As shown by operation 608, the apparatus 200 includes means, such as processor 202, memory 204, communications hardware 206, or the like for updating an internal commodity price list. The communications hardware 206 may receive a query result from the authoritative commodity price service 110. The results of the query may include the current price for the commodity type at the commodity terminal location. In some embodiments, the results of the query may also include a current price for other commodity types and/or a current price for commodity types at other commodity terminal locations (if requested in the query performed in operation 606). Once the query results have been received, the processor 202 may update the internal commodity price list to reflect the current price for the commodity type at the commodity terminal location. The processor 202 may also include an update timestamp indicative of when the listing was updated.

As shown by operation 610, the apparatus 200 includes means, such as processor 202, memory 204, or the like for retrieving the current price of the commodity type from the internal commodity type price list. The processor 202 may retrieve the current price for the commodity type for the commodity terminal location from the internal commodity price list. The retrieved current price is ensured to be accurate because either the processor 202 has determined that the elapsed time satisfies the elapsed time threshold (such that the current price value is not stale) or the internal commodity price list was updated based on a query for the current price of the commodity type at the authoritative commodity price service 110. In some embodiments, the processor 202 mya update the internal fuel type price list based on the current prices for various fuel types at given fuel pump locations.

As shown by operation 612, the apparatus 200 includes means, such as processor 202, memory 204, or the like for determining the current price of the commodity type from the internal commodity price list. The processor 202 may then determine the current price for the commodity type as the current price for the commodity type at the commodity terminal location as retrieved from the internal commodity price list. In some embodiments, the processor 202 may determine the current price of a fuel type by retrieving the current price of the fuel type at the fuel pump location from the internal fuel type price list.

Returning now to FIG. 4, as shown by operation 410, the apparatus 200 includes means, such as processor 202, memory 204, or the like for deriving a total commodity redemption volume. Once the processor 202 has determined the current price of the commodity type at the commodity terminal 108A, the processor 202 may derive a total commodity redemption volume. In particular, the processor 202 may derive the total commodity redemption volume based on the transaction amount included in the transaction request and the current price of the commodity. In some embodiments, the total commodity redemption volume may be a total fuel redemption volume.

By way of particular example, a transaction request may indicate a transaction amount of $50.00 and the processor 202 may determine a current price of $3.50 per gallon for regular unleaded gasoline at gas station X located at commodity terminal location Z. The processor 202 may determine a total commodity redemption volume of 14.29 gallons. The processor 202 may also be configured to perform unit conversions if needed to derive a total commodity redemption volume. For example, a commodity availability data structure in the user account may include an available volume in units of liters per gallon. In an instance in which the current price is dollars per gallon, the processor 202 may convert the current price to dollars per liter or may convert the total commodity redemption volume to liters. By way of continuing example, the processor may determine a total commodity redemption volume of 54.08 liters. As such, example embodiments may provide flexibility that allow for a seamless user transaction experience that is not currently possible using conventional methods.

As shown by operation 412, the apparatus 200 includes means, such as processor 202, memory 204, or the like for updating a commodity availability data structure associated with a user account. Once the processor 202 has derived a total commodity redemption volume, the processor 202 may update the commodity availability data structure associated with the user account. In particular, the processor 202 may update the commodity availability data structure to reflect the redemption of the total commodity redemption volume that was redeemed by the user during the transaction. As such, the commodity availability data structure may be updated to reduce the available volume for the commodity type for a current delivery window. In some embodiments, the processor 202 may update the fuel availability data structure (e.g., the commodity availability data structure) associated with the user account.

For example, a commodity availability data structure in the user account may have an available volume of regular unleaded gasoline of 60 gallons for the delivery window of August 2024. The processor 202 may identify the delivery window for a transaction request received on August 3, 2024. The processor 202 may then reduce the available volume of regular unleaded gasoline from 60 gallons to 45.71 gallons within the commodity availability data structure. Thus, the commodity availability data structure will have an updated available volume of 45.71 gallons for the remainder of the delivery window of August 2024.

As shown by operation 414, the apparatus 200 includes means, such as processor 202, memory 204, communications hardware 206, or the like for transferring funds in satisfaction of the transaction amount. The communications hardware 206 may transfer the funds in satisfaction of the transaction amount to the commodity service device 120A. In some embodiments, the communications hardware 206 may transfer the funds by authorizing a card issuer to approve the transaction request such that the funds are deducted from a financial account associated with apparatus 200 and deposited into a financial account for the vendor, merchant, service provider, etc. and associated with the commodity terminal 108A. In some embodiments, the financial account may be managed by the commodity service device 120A. Alternatively, the communications hardware 206 may cause funds in satisfaction of the transaction amount from an internally managed financial account to be transferred to the commodity service device 120A. In some embodiments, the communications hardware 206 may cause the funds in satisfaction of the transaction amount to be deposited to a financial account associated with the fuel pump terminal. As such, a commodity service device 120A may receive the funds for the transaction in a seamless manner such that the merchant that operates commodity terminal 108A is paid in full for the transaction.

Turning next to FIG. 7, example operations are shown for generating or updating a commodity availability data structure for a user.

Optionally, as shown by operation 702, the apparatus 200 includes means, such as processor 202, memory 204, or the like, for rolling over an excess commodity volume from a prior delivery window. In some embodiments, a current delivery window in a commodity availability data structure may close with a non-zero available volume for a commodity type. As described above, a delivery window may describe a particular time period (e.g., a particular month) and the delivery window may be associated with an available volume for a commodity type. At the close of the delivery window, there may be a non-zero available commodity volume such that it is an excess commodity volume. In some embodiments, the processor 202 may rollover at least a portion of the excess commodity volume to the next chronological delivery window in the commodity availability data structure.

In one particular example, a commodity availability data structure may have an available commodity volume of four gallons of regular unleaded gasoline for the delivery window of August 2024. Starting on September 1, 2024, the delivery window of August may close with an excess commodity volume of four gallons. Thus, in some embodiments, processor 202 may rollover the entire excess commodity volume of four gallons of regular unleaded gasoline to the September 2024 delivery window.

In some embodiments, only a portion of the excess commodity volume may be rolled over into the next delivery window. In some embodiments, the processor 202 may be configured to determine a rollover percentage of the excess volume to rollover. In some embodiments, the rollover percentage may be based on the current delivery window purchase cost for the commodity type and the purchase cost for the commodity type for the now closed delivery window. For example, processor 202 may rollover three gallons of regular unleaded gasoline to the September 2024 delivery window instead of the entire four gallons of excess commodity volume from the August 2024 delivery window.

As shown by operation 704, the apparatus 200 includes means, such as processor 202, memory 204, communications hardware 206, or the like, for receiving a commodity purchase request from a user. In some embodiments, the communications hardware 206 may receive a commodity purchase request from a user device, such as user device 106A. The commodity purchase request may be indicative of a request to purchase a target commodity type for a future delivery window. Additionally, the commodity purchase request may be indicative of a target volume for the commodity type. In some embodiments, the commodity purchase request may be a fuel purchase request that includes a selection of a target fuel type, a target volume for the fuel type, and a future delivery window.

In some embodiments, the processor 202 may be configured with purchasing options for various commodity types for future delivery windows. In some embodiments, these purchasing options are configured by an authorized user (e.g., an employee associated with apparatus 200). For example, a purchasing option for regular unleaded gasoline may be $2.83 per gallon for a future delivery window of June 2025, a purchasing option for regular unleaded gasoline may be $2.80 per gallon for a future delivery window of July 2025, and a purchasing option for regular unleaded gasoline may be $2.75 per gallon for a future delivery window of August 2025.

In some embodiments, a user may select one or more purchasing options and further, may indicate a target volume for each commodity type via the user device 106A and the user device 106A may provide these purchasing selections to the communications hardware 206 as a commodity purchase request. In some embodiments, in order to access the one or more purchasing options, the user must first log into an associated user account via user device 106A. For example, the user may provide associated user credentials (e.g., a username and password) in a logon request to communications hardware 206. The processor 202 may authenticate the logon request based on the provided user credentials and user credentials stored in a corresponding user account. In an instance in which the logon request is successfully authenticated, the user device 106A may establish a secure session with apparatus 200. The communications hardware 206 may provide user account data to the user device 106A and allow the user to view or otherwise access the available purchasing options. In some embodiments, the communications hardware 206 may use hypertext transfer protocols (HTTPS) or secure HTTP protocols (HTTPS) and additionally, may utilize one or more application programming interfaces (APIs) to exchange data with the user device 106A.

As shown by operation 706, the apparatus 200 includes means, such as processor 202, memory 204, communications hardware 206, or the like, for determining a commodity purchase cost. Upon receipt of the commodity purchase request, the processor 202 may determine a commodity purchase cost for the commodity purchase request. In particular, the processor 202 may determine a commodity purchase cost based on a target commodity type and target volume selected by the user for each delivery window. In some embodiments, the processor 202 may be configured to further apply one or more discounts and/or promotions if applicable for the user account and/or if included in the commodity purchase request. In some embodiments, the commodity purchase cost is a fuel purchase cost.

By way of continuing example, the commodity purchase request received from user device 106A may be indicative that a user has selected to purchase 20 gallons of regular unleaded gasoline for the future delivery window of June 2025, 40 gallons of regular unleaded gasoline for the future delivery window of July 2025, and 50 gallons of regular unleaded gasoline for the future delivery window of August 2025. The processor 202 may then determine a commodity purchase cost of $306.10 for the purchasing options selected by the user as indicated by the commodity purchase request.

Once the processor 202 has determined the commodity purchase cost, the communications hardware 206 may provide an indication of the commodity purchase cost to the user device 106A. For example, the communications hardware 206 may provide a notification, update, or HTTP/HTTPS response to the user device 106A enabling the user device 106A to display the commodity purchase cost to the user. The user device 106A may receive input from the user indicative of any changes to the purchasing selections and may provide an updated commodity purchase request to communications hardware 206. In such an instance, the processor 202 may determine an updated commodity purchase cost and provide this to the user device 106A. The user device 106A may further display options for the user to proceed with the purchase or cancel the purchase.

As shown by operation 708, the apparatus 200 includes means, such as processor 202, memory 204, communications hardware 206, or the like, for receiving funds in satisfaction of the commodity purchase cost. In an instance in which the user device 106A receives confirmation from the user to proceed with the commodity purchase request for the commodity purchase cost, the communications hardware 206 may receive funds in satisfaction of the commodity purchase cost. In some embodiments, the funds may be received from a third-party device, such as a user payment account service device that is associated with a financial institution where a user has a payment account. In some embodiments, the funds may be received directly by communications hardware 206, and the processor 202 may route the received funds to an appropriate financial account. Alternatively, the funds may be received by a third-party acquirer with whom the apparatus 200 maintains a financial account. The third-party acquirer may provide a confirmation to communications hardware 206 upon receipt of the funds from the user device.

As shown by operation 710, the apparatus 200 includes means, such as processor 202, memory 204, or the like, for updating a commodity availability data structure. Once the funds in satisfaction of the commodity purchase cost have been received by the apparatus 200, the processor 202 may update the commodity availability data structure associated with the user account to reflect the commodity purchase. In particular, the processor 202 may update the commodity availability data structure to reflect the purchase of the target commodity type and the target volume for the corresponding delivery window. As such, the user may be enabled to use the designated card associated with the user account to facilitate a purchase of the commodity type up to the available volume for the future delivery window. In some embodiments, the processor 202 may update the fuel availability data structure to reflect the purchase of the target fuel type and the target volume for the fuel type for the future delivery window.

By way of continuing example, upon receipt of $306.10 in satisfaction of the commodity purchase cost, the processor 202 may update the commodity availability data structure for the user account to reflect an available volume of 20 gallons of regular unleaded gasoline for the future delivery window of June 2025, an available volume of 40 gallons of regular unleaded gasoline for the future delivery window of July 2025, and an available volume of 50 gallons of regular unleaded gasoline for the future delivery window of August 2025. If a user should use the designated card during June 2025 to facilitate a commodity purchase at a commodity terminal, the processor 202 may determine an available volume of twenty gallons of regular unleaded gasoline and may facilitate payment in satisfaction of a transaction amount, as described in greater detail in FIG. 4.

Turning next to FIG. 8, example operations are shown for handling an overdraft commodity volume for a transaction request.

As shown by operation 802, the apparatus 200 includes means, such as processor 202, memory 204, or the like, for determining that an available volume of a commodity type is insufficient to satisfy a total commodity redemption volume. In some embodiments, the available volume of a commodity type may be insufficient to satisfy the total commodity redemption volume. For example, a commodity availability data structure for a user account may include ten gallons of regular unleaded gasoline for the August 2024 delivery window. However, the total commodity redemption volume may be twelve gallons such that the user attempted to redeem two gallons more than the available volume for the commodity type. Thus, the processor 202 may determine the available volume of the commodity type is insufficient for the total commodity redemption volume. In some embodiments, the processor may determine that an available volume of fuel is insufficient to satisfy the total fuel redemption volume using the fuel availability data structure.

As shown by operation 804, the apparatus 200 includes means, such as processor 202, memory 204, or the like, for determining an overdraft commodity volume. In an instance in which the processor 202 determines the available volume of the commodity type is insufficient to satisfy the total commodity redemption volume, the processor 202 may determine the overdraft commodity volume. The overdraft commodity volume may be the volume over which the total commodity redemption volume exceeded the available volume. For example, a commodity availability data structure for a user account may include ten gallons of regular unleaded gasoline for the August delivery window. However, the total commodity redemption volume may be twelve gallons such that the user attempted to redeem two gallons more than the available volume for the commodity type. Thus, the processor 202 may determine an overdraft commodity volume of two gallons. In some embodiments, the overdraft commodity volume is an overdraft fuel volume.

As shown by operation 806, the apparatus 200 includes means, such as processor 202, memory 204, or the like, for determining an overdraft cost. The processor 202 may determine the overdraft cost based on the overdraft commodity volume. In particular, the processor 202 may determine the overdraft cost using the overdraft commodity volume and the current price of the commodity, as determined in operation 408 of FIG. 4. In one particular example, if the current price of regular unleaded gasoline is $3.50 per gallon and the overdraft commodity volume is two gallons, the processor 202 may calculate an overdraft cost of $7.00. In some embodiments, the processor 202 may additionally include additional fees or penalties when determining the overdraft cost.

As shown by operation 808, the apparatus 200 includes means, such as processor 202, memory 204, communications hardware 206, or the like, for initiating a charge to a user account for the overdraft cost. In some embodiments, the user account may be linked to a payment account of the user. The communications hardware 206 may indicate a charge to the payment account of the user for the overdraft cost.

In an instance in which the user has an insufficient available volume for a commodity type to cover the total commodity redemption volume, the communications hardware 206 may still transfer the funds in satisfaction of the transaction amount to the commodity service device 120A, as described in operation 414 of FIG. 4. Thus, the merchant associated with the commodity terminal 108A receives payment even if the user has a deficit available volume.

In order to avoid such overdrafts, in some embodiments, an initial transaction request may be received prior to the transaction occurring. In some embodiments, the initial transaction request may include the account identifier associated with a user account and a commodity terminal identifier but not the transaction amount. The processor 202 may treat the initial transaction request as a pre-authorization request and may perform operation 404 of FIG. 4 to determine the commodity terminal location and operation 408 of FIG. 4 to determine a current price of the commodity type at the commodity terminal. The processor may then use the commodity availability data structure associated with the user's account to determine the available volume for the commodity type for the current delivery window and then derive a commodity redemption ceiling. The commodity redemption ceiling may be indicative of a topmost limit for a transaction amount to ensure the user does not overdraft an available volume for the commodity type during the current delivery window. The communications hardware 206 may provide the available volume and/or the commodity redemption ceiling to the commodity service device 120A, which in turn may provide the available volume and/or commodity redemption ceiling to the commodity terminal 108A. The commodity terminal 108A may then only allow the user to redeem the commodity type up to but not exceeding the available volume or up to a transaction amount up to but not exceeding the commodity redemption ceiling. Upon completion of the transaction, the commodity terminal 108A may provide the transaction notification to the commodity service device 120A and in turn, the commodity service device 120A may provide the transaction request as described in operation 402 of FIG. 4.

By way of particular example, a user may initiate a transaction at a fuel pump (e.g., commodity terminal 108A), such as by swiping the designated card at the fuel pump. This may cause the fuel pump to provide an initial transaction notification to commodity service device 120A, and the commodity service device 120A may provide an initial transaction request to the communications hardware 206. The processor 202 may identify the commodity availability data structure for the user account based the account identifier included in the initial transaction request and further, may determine the commodity terminal location based on a fuel pump terminal identified included in the initial transaction request. The processor 202 may determine the commodity availability data structure includes an available volume of 10 gallons of regular unleaded gasoline for the current delivery window of August 2024. The processor 202 may further determine the current price of regular unleaded gasoline is $3.50 per gallon at the commodity terminal location. Thus, the processor 202 may determine an available volume of ten gallons and a commodity redemption ceiling of $3 5.00. The communications hardware 206 may provide the available volume of ten gallons and/or the commodity redemption ceiling of $35.00 to the commodity service device 120A, which in turn may provide one or more of these values to the fuel pump. The fuel pump may then only allow the user to dispense up to ten gallons of gasoline or dispense up to $35.00 worth of gasoline, thus preventing the user from exceeding the available volume of regular unleaded gasoline (e.g., the commodity type) for the current delivery window.

FIGS. 4-8 illustrate operations performed by apparatuses, methods, and computer program products according to various example embodiments. It will be understood that each flowchart block, and each combination of flowchart blocks, may be implemented by various means, embodied as hardware, firmware, circuitry, and/or other devices associated with execution of software including one or more software instructions. For example, one or more of the operations described above may be implemented by execution of software instructions. As will be appreciated, any such software instructions may be loaded onto a computing device or other programmable apparatus (e.g., hardware) to produce a machine, such that the resulting computing device or other programmable apparatus implements the functions specified in the flowchart blocks. These software instructions may also be stored in a non-transitory computer-readable memory that may direct a computing device or other programmable apparatus to function in a particular manner, such that the software instructions stored in the computer-readable memory comprise an article of manufacture, the execution of which implements the functions specified in the flowchart blocks.

The flowchart blocks support combinations of means for performing the specified functions and combinations of operations for performing the specified functions. It will be understood that individual flowchart blocks, and/or combinations of flowchart blocks, can be implemented by special purpose hardware-based computing devices which perform the specified functions, or combinations of special purpose hardware and software instructions.

### Example Operational Flows

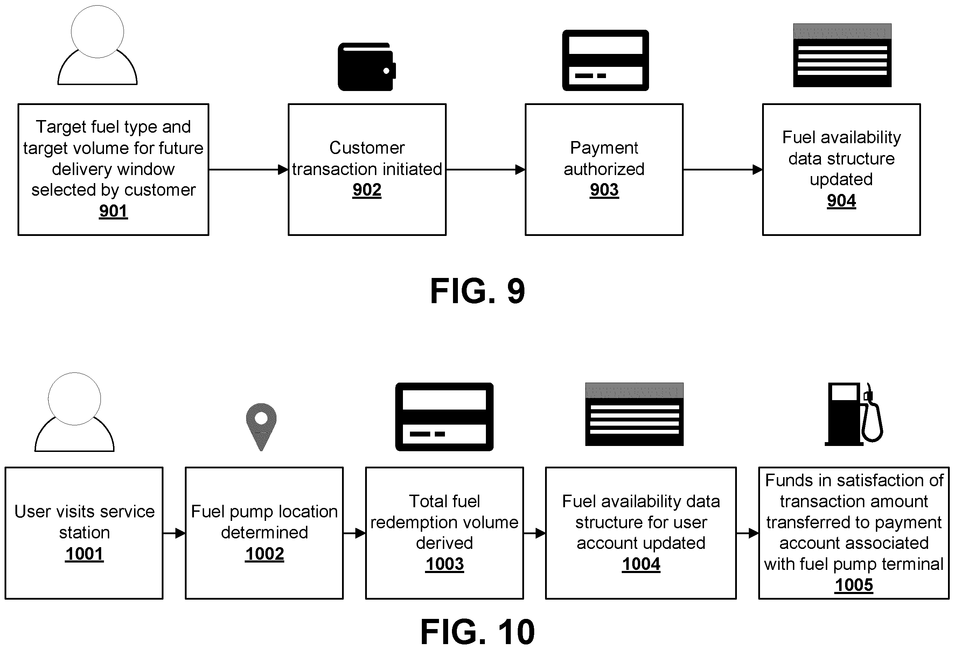

Turning now to FIG. 9, an example operational flow for updating a fuel availability data structure is shown. As shown in operation 901, a user may begin by selecting a target fuel type and a target volume for a future delivery window. For example, the user may use a user device, such as user device 106A, to select the target fuel type and the target volume for a delivery window. At operation 902, the user may initiate a transaction by providing a commodity purchase request to the commodity management system 102. The commodity management system 102 may receive a fuel purchase request and may determine and provide a fuel purchase cost to the user device 106A. At operation 903, the user may then use user device 106A to authorize payment in satisfaction of the fuel purchase cost via user device 106A. At operation 904, upon receipt of the funds in satisfaction of the fuel purchase cost, the commodity management system 102 may then update the fuel availability data structure for the user account. In particular, the commodity management system 102 may update the fuel availability data structure to reflect the purchased fuel type and volume for the future delivery window selected by the user.

Turning now to FIG. 10, an example operational flow for updating a fuel availability data structure to reflect a transaction request is shown. As shown in operation 1001, the user may visit a particular service station (e.g., gas station, petrol station, or the like). During the visit, the user may initiate a transaction at the fuel pump using a designated card that is linked to the user account and/or fuel availability data structure. The commodity management system 102 may receive a transaction request that includes the account identifier associated with the user account, a fuel pump terminal identifier, and/or a transaction amount. At operation 1002, the commodity management system 102 may determine the fuel pump location based on the fuel pump terminal identifier. At operation 1003, the commodity management system 102 may derive the total fuel redemption volume based on a current price of the fuel type at the fuel pump location. At operation 1004, the commodity management system 102 may update the fuel availability data structure for the user account to reflect the redemption of the total fuel redemption volume. At operation 1005, the commodity management system 102 may transfer funds in satisfaction of the transaction amount to a payment account associated with the fuel pump terminal, such as to a payment account managed by commodity service device 120A.

### Example System Interaction

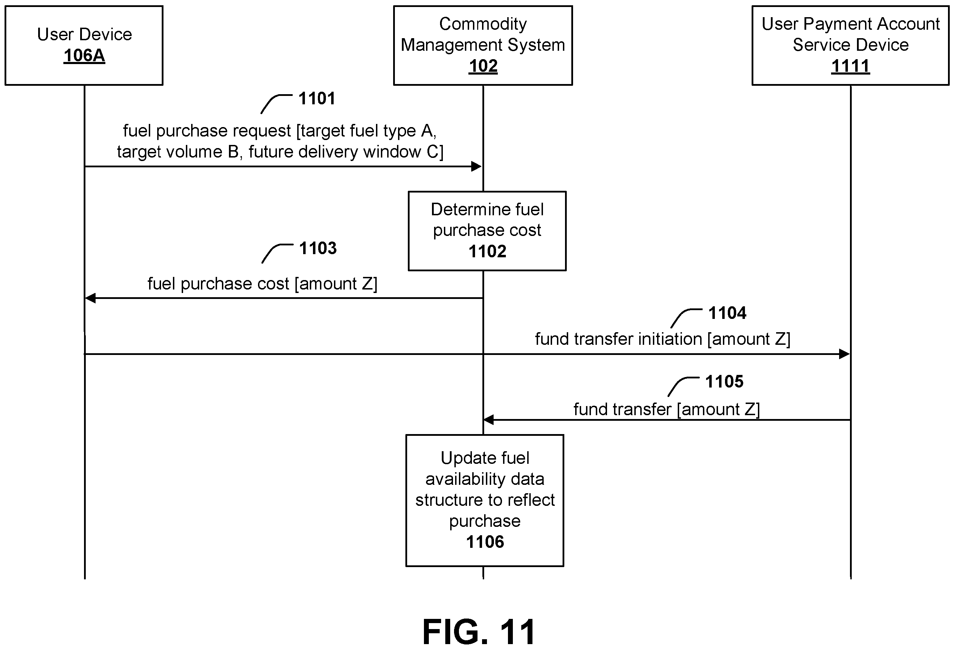

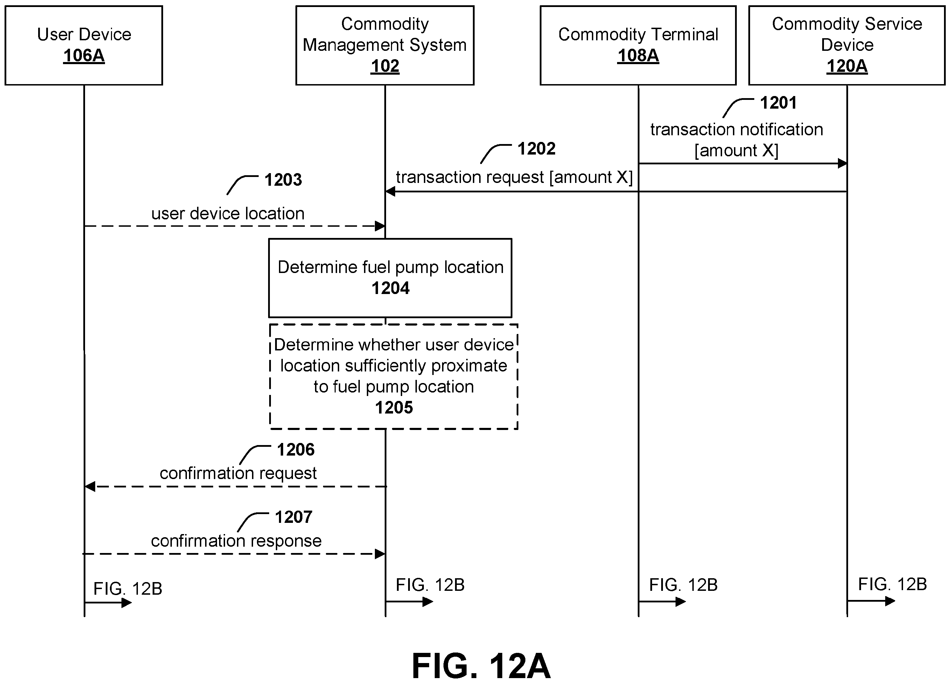

FIGS. 11 and 12A-12C show swim lane diagrams illustrating example operations (e.g., as described above in connection with FIGS. 4-8) performed by components of the environment depicted in FIG. 1 to produce various benefits of the implementations described herein. The operations shown in the swim lane diagram performed by user device (e.g., any one of user devices 106A-106N) are shown along the line extending from the box labeled "user device 106A," operations performed by a commodity management system 102 are shown along the line extending from the box labeled "commodity management system 102," operations performed by a user payment account service device are shown along the line extending from the box labeled "user payment account service device 1111," operations performed by a commodity terminal (e.g., any one of commodity terminals 108A-108N) are shown along the line extending from the box labeled "commodity terminal 108A," operations performed by a commodity service device (e.g., any one of commodity service devices 120A-120N) are shown along the line extending from the box labeled "commodity service device 120A," and operations performed by an authoritative commodity price service 110 are shown along the line extending from the box labeled "authoritative commodity price service 110."

Operations impacting multiple devices, such as data transmissions between the devices, are shown using arrows extending between these lines. Generally, these operations are ordered temporally with respect to one another. However, it will be appreciated that the operations may be performed in other orders from those illustrated in FIG. 11.

At operation 1101, in response to user input, the user device 106A may provide a fuel purchase request to commodity management system 102. The fuel purchase request may indicate the target fuel type, the target volume, and the future delivery window as selected by the user. At operation 1102, the commodity management system 102 may determine a fuel purchase cost for the fuel purchase request. At operation 1103, the commodity management system 102 may provide an indication of the fuel purchase cost to the user device 106A. At operation 1104, the user device 106A may initiate a fund transfer from the user payment account service device 1111 to the commodity management system 102. At operation 1105, the user payment account service device 1111 may transfer the amount of funds in satisfaction of the fuel purchase cost to the commodity management system. At operation 1106, the commodity management system 102 may update the fuel availability data structure of the user to reflect the purchase.

Turning next to FIGS. 12A-12C, these figures show a swim lane diagram illustrating example operations (e.g., as described above in connection with FIGS. 4-8) performed by components of the environment depicted in FIG. 1 to produce various benefits of the implementations described herein. The operations shown in the swim lane diagram performed by user device (e.g., any one of user devices 106A-106N) are shown along the line extending from the box labeled "user device 106A," operations performed by a commodity management system 102 are shown along the line extending from the box labeled "commodity management system 102," operations performed by a commodity terminal (e.g., any one of commodity terminals 108A-108N) are shown along the line extending from the box labeled "commodity terminal 108A," and operations performed by a commodity service device (e.g., any one of commodity service devices 120A-120N) are shown along the line extending from the box labeled "commodity service device 120A." Operations impacting multiple devices, such as data transmissions between the devices, are shown using arrows extending between these lines. Generally, these operations are ordered temporally with respect to one another. However, it will be appreciated that the operations may be performed in other orders from those illustrated in FIGS. 12A-12C.

Turning first to FIG. 12A, at operation 1201, the commodity terminal 108A may provide a transaction notification for a particular amount to commodity service device 120A. The commodity terminal 108A may provide the transaction notification in response a user-initiated transaction with the commodity terminal 108A. At operation 1202, the commodity service device 120A provides a transaction request for the amount indicated by the transaction notification to the commodity management system 102. Optionally, at operation 1203, the commodity management system 102 receives a user device location from the user device 106A. At operation 1204, the commodity management system 102 determines a fuel pump location. Optionally, at operation 1205, the commodity management system 102 determines whether the user device location is sufficiently proximate to the fuel pump location. Optionally, in an instance in which the commodity management system 102 determines the user device location is not sufficiently proximate to the fuel pump location, at operation 1206 the commodity management system 102 may provide a confirmation request to the user device 106A and at operation 1207 the user device 106A may provide a confirmation response to the commodity management system 102. The confirmation response may verify the authenticity of the transaction request.

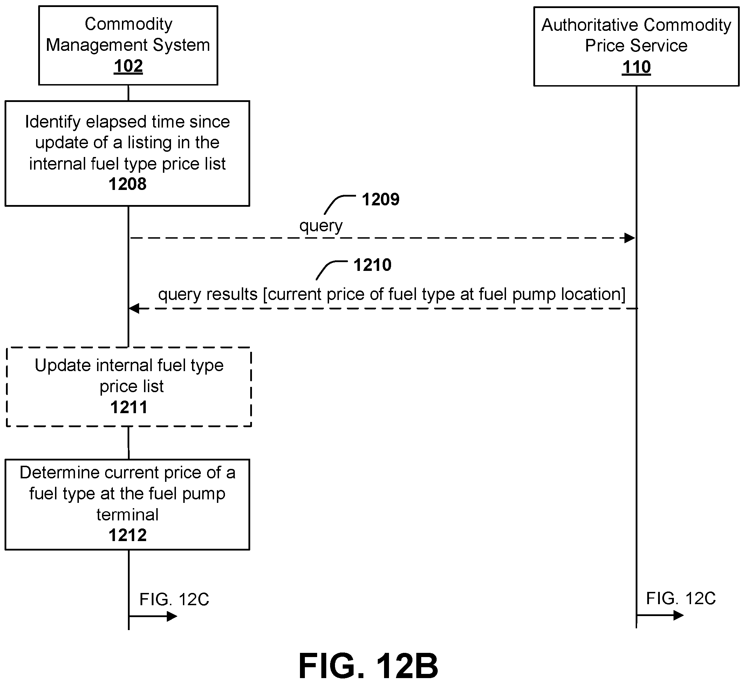

Turning now to FIG. 12B, at operation 1208, the commodity management system 102 may identify an elapsed time since an update of a listing in the internal fuel type price list. In an instance in which the elapsed time fails to satisfy an elapsed time threshold, at operation 1209 the commodity management system 102 may query an authoritative commodity price service 110 and at operation 1210, the authoritative commodity price service 110 may provide the query results to the commodity management system. The query results may include the current price of the fuel type at the fuel pump location. Optionally, at operation 1211, the commodity management system 102 may update the internal fuel type price list based on the query results. At operation 1212, the commodity management system 102 may determine the current price of a fuel type at the fuel pump terminal.

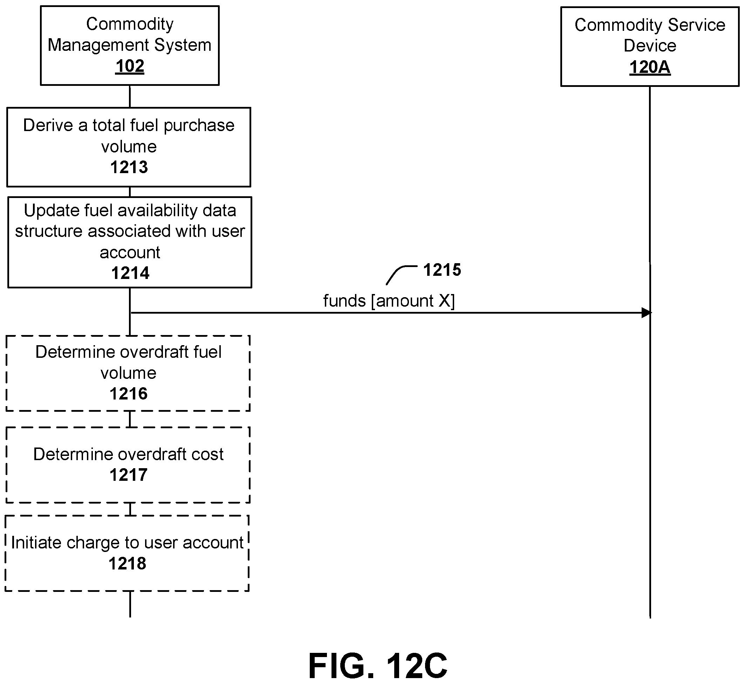

Turning now to FIG. 12C, at operation 1213, the commodity management system 102 may derive a total fuel redemption volume. At operation 1214, the commodity management system 102 may update a fuel availability data structure associated with the user account based on the total fuel redemption volume. At operation 1215, the commodity management system 102 may transfer the funds in satisfaction of the amount indicated in the transaction request to the commodity service device 120A. Optionally, at operation 1216 the commodity management system 102 may determine an overdraft fuel volume and at operation 1217, the commodity management system may determine the overdraft cost based on the overdraft fuel volume. Optionally, at operation 1218, the commodity management system 102 may initiate a charge to the user account based on the overdraft cost.

In some embodiments, some of the operations described above in connection with FIGS. 4-8 may be modified or further amplified. Furthermore, in some embodiments, additional optional operations may be included. Modifications, amplifications, or additions to the operations above may be performed in any order and in any combination.

### Claim Clauses

Clause 1. A computer-implemented method for autonomously deriving consumption of fuel, the computer-implemented method comprising: receiving a transaction request comprising (i) an account identifier associated with a user account, (ii) a transaction amount, and (iii) a fuel pump terminal identifier; determining a fuel pump location associated with the fuel pump terminal identifier; determining, based on the fuel pump location, a current price of a fuel type; deriving, based on the current price of the fuel type, a total fuel redemption volume corresponding to the transaction request; and updating, based on the total fuel redemption volume, a fuel availability data structure associated with the user account.

Clause 2. The computer-implemented method of clause 1, further comprising: receiving a user device location from a user device associated with the user account; and determining whether the fuel pump location is sufficiently proximate to the user device location, wherein updating the fuel availability data structure occurs in an instance in which the fuel pump location is determined to be sufficiently proximate to the user device location.

Clause 3. The computer-implemented method of clauses 1 and/or 2, further comprising: in an instance in which the fuel pump location is not sufficiently proximate to the user device location, transmitting a confirmation request to the user device seeking verification of authenticity of the transaction request; receiving a confirmation response from the user device; in an instance in which the confirmation response verifies the authenticity of the transaction request, transferring funds to a financial account associated with the fuel pump terminal identifier in satisfaction of the transaction amount; and in an instance in which the confirmation response does not verify the authenticity of the transaction request, declining the transaction request.

Clause 4. The computer-implemented method of any combination of clauses 1-3, further comprising transferring funds in satisfaction of the transaction amount.

Clause 5. The computer-implemented method of any combination of clauses 1-4, further comprising: querying an authoritative fuel price service for the current price of the fuel type at the fuel pump location; and updating an internal fuel type price list using the current price of the fuel type, wherein determining the current price of the fuel type comprises retrieving the current price of the fuel type from the internal fuel type price list.

Clause 6. The computer-implemented method of any combination of clauses 1-5, wherein the authoritative fuel price service is queried at least once per day.

Clause 7. The computer-implemented method of any combination of clauses 1-6, further comprising: identifying an elapsed time since updating of a listing, in the internal fuel type price list, of the current price of the fuel type at the fuel pump location; and determining whether the elapsed time satisfies an elapsed time threshold, wherein querying the authoritative fuel price service occurs in response to the elapsed time failing to satisfy the elapsed time threshold.

Clause 8. The computer-implemented method of any combination of clauses 1-7, further comprising: receiving a fuel purchase request from a user, the fuel purchase request comprising selections of (i) a target fuel type, (ii) a target volume for the fuel type, and (iii) a future delivery window; determining, based on the target fuel type and the target volume, a fuel purchase cost; receiving funds from a payment account of the user in satisfaction of the fuel purchase cost; and updating the fuel availability data structure to reflect a purchase of the target fuel type and the target volume for the fuel type for the future delivery window.

Clause 9. The computer-implemented method of any combination of clauses 1-8, further comprising: determining, using the fuel availability data structure, that an available volume of fuel is insufficient to satisfy the total fuel redemption volume; determining an overdraft fuel volume; determining, based on the overdraft fuel volume and the current price of the fuel type, an overdraft cost; and initiating a charge to the user account for the overdraft cost.

Clause 10. An apparatus for autonomously deriving consumption of fuel, wherein the apparatus comprises at least one processor and at least one memory storing software instructions that, when executed by the at least one processor, cause the apparatus to: receive a transaction request comprising (i) an account identifier associated with a user account, (ii) a transaction amount, and (iii) a fuel pump terminal identifier; determine a fuel pump location associated with the fuel pump terminal identifier; determine, based on the fuel pump location, a current price of a fuel type; derive, based on the current price of the fuel type, a total fuel redemption volume corresponding to the transaction request; and update, based on the total fuel redemption volume, a fuel availability data structure associated with the user account.

Clause 11. The apparatus of clause 10, wherein the software instructions, when executed by the at least one processor, further cause the apparatus to: receive a user device location from a user device associated with the user account; and determine whether the fuel pump location is sufficiently proximate to the user device location, wherein updating the fuel availability data structure occurs in an instance in which the fuel pump location is determined to be sufficiently proximate to the user device location.

Clause 12. The apparatus of clauses 10 and/or 11, wherein the software instructions, when executed by the at least one processor, further cause the apparatus to: in an instance in which the fuel pump location is not sufficiently proximate to the user device location, transmitting a confirmation request to the user device seeking verification of authenticity of the transaction request; receiving a confirmation response from the user device; in an instance in which the confirmation response verifies the authenticity of the transaction request, transferring funds to a financial account associated with the fuel pump terminal identifier in satisfaction of the transaction amount; and in an instance in which the confirmation response does not verify the authenticity of the transaction request, declining the transaction request.

Clause 13. The apparatus of any combination of clauses 10-12, wherein the software instructions, when executed by the at least one processor, further cause the apparatus to transfer funds in satisfaction of the transaction amount.

Clause 14. The apparatus of any combination of clauses 10-13, wherein the software instructions, when executed by the at least one processor, further cause the apparatus to: query an authoritative fuel price service for the current price of the fuel type at the fuel pump location; and update an internal fuel type price list using the current price of the fuel type, wherein determining the current price of the fuel type comprises retrieving the current price of the fuel type from the internal fuel type price list.

Clause 15. The apparatus of any combination of clauses 10-14, wherein the authoritative fuel price service is queried at least once per day.

Clause 16. The apparatus of any combination of clauses 10-15, wherein the software instructions, when executed by the at least one processor, further cause the apparatus to: identify an elapsed time since updating of a listing, in the internal fuel type price list, of the current price of the fuel type at the fuel pump location; and determine whether the elapsed time satisfies an elapsed time threshold, wherein querying the authoritative fuel price service occurs in response to the elapsed time failing to satisfy the elapsed time threshold.

Clause 17. The apparatus of any one or more of clauses 10-16, wherein the software instructions, when executed by the at least one processor, further cause the apparatus to: receive a fuel purchase request from a user, the fuel purchase request comprising selections of (i) a target fuel type, (ii) a target volume for the fuel type, and (iii) a future delivery window; determine, based on the target fuel type and the target volume, a fuel purchase cost; receive funds from a payment account of the user in satisfaction of the fuel purchase cost; and update the fuel availability data structure to reflect a purchase of the target fuel type and the target volume for the fuel type for the future delivery window.

Clause 18. The apparatus of any combination of clauses 10-17, wherein the software instructions, when executed by the at least one processor, further cause the apparatus to: determine, using the fuel availability data structure, that an available volume of fuel is insufficient to satisfy the total fuel redemption volume; determine an overdraft fuel volume; determine, based on the overdraft fuel volume and the current price of the fuel type, an overdraft cost; and initiate a charge to the user account for the overdraft cost.

Clause 19. An apparatus for autonomously deriving consumption of fuel, the apparatus comprising: means for receiving a transaction request comprising (i) an account identifier associated with a user account, (ii) a transaction amount, and (iii) a fuel pump terminal identifier; means for determining a fuel pump location associated with the fuel pump terminal identifier; means for determining, based on the fuel pump location, a current price of a fuel type; means for deriving, based on the current price of the fuel type, a total fuel redemption volume corresponding to the transaction request; and means for updating, based on the total fuel redemption volume, a fuel availability data structure associated with the user account.

Clause 20. The apparatus of clause 19, wherein the apparatus further comprises: means for receiving a user device location from a user device associated with the user account; and means for determining whether the fuel pump location is sufficiently proximate to the user device location, wherein updating the fuel availability data structure occurs in an instance in which the fuel pump location is determined to be sufficiently proximate to the user device location.

Clause 21. The apparatus of clauses 19 and/or 20, wherein the apparatus further comprises: in an instance in which the fuel pump location is not sufficiently proximate to the user device location, means for transmitting a confirmation request to the user device seeking verification of authenticity of the transaction request; means for receiving a confirmation response from the user device; in an instance in which the confirmation response verifies the authenticity of the transaction request, means for transferring funds to a financial account associated with the fuel pump terminal identifier in satisfaction of the transaction amount; and in an instance in which the confirmation response does not verify the authenticity of the transaction request, means for declining the transaction request.

Clause 22. The apparatus of any combination of clauses 19-21, wherein the apparatus further comprises: means for transferring funds in satisfaction of the transaction amount.

Clause 23. The apparatus of any combination of clauses 19-22, wherein the apparatus further comprises: means for querying an authoritative fuel price service for the current price of the fuel type at the fuel pump location; and means for updating an internal fuel type price list using the current price of the fuel type, wherein determining the current price of the fuel type comprises retrieving the current price of the fuel type from the internal fuel type price list.

Clause 24. The apparatus of any combination of clauses 19-23, wherein the authoritative fuel price service is queried at least once per day.

Clause 25. The apparatus of any combination of clauses 19-24, wherein the apparatus further comprises: means for identifying an elapsed time since updating of a listing, in the internal fuel type price list, of the current price of the fuel type at the fuel pump location; and means for determining whether the elapsed time satisfies an elapsed time threshold, wherein querying the authoritative fuel price service occurs in response to the elapsed time failing to satisfy the elapsed time threshold.

Clause 26. The apparatus of any combination of clauses 19-25, wherein the apparatus further comprises: means for receiving a fuel purchase request from a user, the fuel purchase request comprising selections of (i) a target fuel type, (ii) a target volume for the fuel type, and (iii) a future delivery window; means for determining, based on the target fuel type and the target volume, a fuel purchase cost; means for receiving funds from a payment account of the user in satisfaction of the fuel purchase cost; and means for updating the fuel availability data structure to reflect a purchase of the target fuel type and the target volume for the fuel type for the future delivery window.

Clause 27. The apparatus of any combination of clauses 19-26, wherein the apparatus further comprises: means for determining, using the fuel availability data structure, that an available volume of fuel is insufficient to satisfy the total fuel redemption volume; means for determining an overdraft fuel volume; means for determining, based on the overdraft fuel volume and the current price of the fuel type, an overdraft cost; and means for initiating a charge to the user account for the overdraft cost.

### Conclusion

As described above, example embodiments provide methods and apparatuses that provide consumers with a more robust and flexible system for commodity purchasing. Example, embodiments thus provide tools that are not reliant on particular commodity suppliers and allow users to make commodity purchases without paying elevated price points set by suppliers in the retail market. Moreover, embodiments described herein provide for the autonomous derivation of commodity consumption for transaction requests such that users may facilitate commodity purchases with a designated card that is linked to a user account and/or a commodity availability data structure.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method for autonomously deriving consumption of fuel, the computer-implemented method comprising:
receiving a transaction request comprising (i) an account identifier associated with a user account, (ii) a transaction amount, and (iii) a fuel pump terminal identifier;
determining a fuel pump location associated with the fuel pump terminal identifier;
determining, based on the fuel pump location, a current price of a fuel type;
deriving, based on the current price of the fuel type, a total fuel redemption volume corresponding to the transaction request; and
updating, based on the total fuel redemption volume, a fuel availability data structure associated with the user account.

2. The computer-implemented method of claim 1, further comprising:
receiving a user device location from a user device associated with the user account; and
determining whether the fuel pump location is sufficiently proximate to the user device location,
wherein updating the fuel availability data structure occurs in an instance in which the fuel pump location is determined to be sufficiently proximate to the user device location.

3. The computer-implemented method of claim 2, further comprising:
in an instance in which the fuel pump location is not sufficiently proximate to the user device location, transmitting a confirmation request to the user device seeking verification of authenticity of the transaction request;
receiving a confirmation response from the user device;
in an instance in which the confirmation response verifies the authenticity of the transaction request, transferring funds to a financial account associated with the fuel pump terminal identifier in satisfaction of the transaction amount; and
in an instance in which the confirmation response does not verify the authenticity of the transaction request, declining the transaction request.

4. The computer-implemented method of any of the preceding claims, further comprising transferring funds in satisfaction of the transaction amount.

5. The computer-implemented method of any of the preceding claims, further comprising:
querying an authoritative fuel price service for the current price of the fuel type at the fuel pump location; and
updating an internal fuel type price list using the current price of the fuel type,
wherein determining the current price of the fuel type comprises retrieving the current price of the fuel type from the internal fuel type price list.

6. The computer-implemented method of claim 5, wherein the authoritative fuel price service is queried at least once per day.

7. The computer-implemented method of claim 5 or 6, further comprising:
identifying an elapsed time since updating of a listing, in the internal fuel type price list, of the current price of the fuel type at the fuel pump location; and
determining whether the elapsed time satisfies an elapsed time threshold,
wherein querying the authoritative fuel price service occurs in response to the elapsed time failing to satisfy the elapsed time threshold.

8. The computer-implemented method of any of the preceding claims, further comprising:
receiving a fuel purchase request from a user, the fuel purchase request comprising selections of (i) a target fuel type, (ii) a target volume for the fuel type, and (iii) a future delivery window;
determining, based on the target fuel type and the target volume, a fuel purchase cost;
receiving funds from a payment account of the user in satisfaction of the fuel purchase cost; and
updating the fuel availability data structure to reflect a purchase of the target fuel type and the target volume for the fuel type for the future delivery window.

9. The computer-implemented method of any of the preceding claims, further comprising:
determining, using the fuel availability data structure, that an available volume of fuel is insufficient to satisfy the total fuel redemption volume;
determining an overdraft fuel volume;
determining, based on the overdraft fuel volume and the current price of the fuel type, an overdraft cost; and
initiating a charge to the user account for the overdraft cost.

10. An apparatus for autonomously deriving consumption of fuel, wherein the apparatus comprises means for performing the method of one or more of the preceding claims.
